## Europäisches Patentamt
## European Patent Office
## Office européen des brevets

(19)

(11) Publication number: **0 013 674**
**B1**

(12)
# EUROPEAN PATENT SPECIFICATION

(45) Date of publication of patent specification: **27.10.82**

(51) Int. Cl.³: **B 60 T 7/20, F 16 D 65/56**

(21) Application number: **79100236.3**

(22) Date of filing: **29.01.79**

(54) **Shoe and drum brake.**

(43) Date of publication of application:
**06.08.80 Bulletin 80/16**

(45) Publication of the grant of the patent:
**27.10.82 Bulletin 82/43**

(84) Designated Contracting States:
**DE FR NL SE**

(56) References cited:
**DE - C - 717 045**
**FR - A - 1 144 531**
**FR - A - 1 544 028**
**FR - A - 2 137 796**
**FR - E - 50 476**
**GB - A - 842 156**
**US - A - 1 799 227**
**US - A - 1 919 519**

The file contains technical information submitted after the application was filed and not included in this specification

(73) Proprietor: **Chouings, Leslie Cyril**
**Holly Croft Bourton**
**Nr. Rugby Warwickshire (GB)**

(72) Inventor: **Chouings, Leslie Cyril**
**Holly Croft Bourton**
**Nr. Rugby Warwickshire (GB)**

(74) Representative: **Lewis, Samuel Hewitt et al,**
**FORRESTER & BOEHMERT Widenmayerstrasse 4/I**
**D-8000 München 22 (DE)**

Courier Press, Leamington Spa, England.

## Shoe and drum brake

This invention relates to shoe and drum brakes of the type, hereinafter referred to as being of the type described, in which a given brake actuator input to apply the brake results in a much higher braking torque when the drum is rotating in one direction (hereinafter referred to as the forward direction) than when the drum is rotating in the opposite direction (hereinafter referred to as the reverse direction), the brake mechanism including clearance which is retained during application of the brake during forward rotation of the drum and which is reduced or substantially eliminated upon brake application during reverse rotation of the drum.

The invention finds application in trailer brakes which are applied by the trailer tending to overrun the towing vehicle when the latter slows down. With such trailer brakes it is necessary to make provision for reversing the trailer without applying the brakes or applying them to any substantial extent. The simplest provision is a mechanical spacer which can be moved into position to prevent movement of the tow bar of the trailer to apply the brakes. It has also been proposed to include, in the brake, some mechanism which limits the brake torque in reverse. These mechanisms rely, for their operation, on the changes in direction and magnitude of the forces exerted by the shoes when the drum changes from rotating in the forward direction to rotating in the reverse direction. The brakes of the invention include such mechanism and may be of the leading and trailing shoe kind, the duo-servo kind having primary and secondary shoes, or the bi-directional, two-leading-shoe kind in which each shoe acts as a leading shoe during rotation of the drum in either direction.

A brake of the type described is disclosed in French specification 2137796 of Merz. This brake comprises a coupling 1 mounted on a trailer for limited longitudinal movement relative to the trailer. Rearward movement of the coupling relative to the trailer causes application of brake-shoes to a brake drum. However, the force which is transmitted from the coupling to the shoes when the coupling reaches the limit of its travel is restricted. A larger force can be transmitted to the brake shoes from a handbrake lever 9.

The Merz brake has an expander 25 between adjacent ends of primary and secondary shoes. The expander is biased by a stack of Belville washers in a direction away from the secondary shoe. The force which can be transmitted from the coupling 1 to the brake shoes is so limited that the Belville washers prevent application of the adjacent end of the secondary shoe to the drum by the expander. Accordingly, if the trailer is reversed by a tractor, the force transmitted from the coupling to the expander fails to apply the secondary shoe to the drum and the secondary shoe fails to apply the primary shoe to the drum. Only a slight braking effect occurs, even if the coupling is moved rearwardly relative to the trailer to the limit of its travel.

If the coupling of the Merz brake is moved rearwardly relative to the trailer whilst the trailer is moving forwardly, the expander applies the primary shoe to the drum and the primary shoe applies the secondary shoe to the drum. Accordingly, substantial braking effect is achieved. This braking effect is necessarily limited because the force which can be transmitted from the coupling to the brake shoes is limited. A larger braking effect can be achieved by means of hand brake, which is able to compress the stack of Belville washers and apply both shoes to the drum.

In the Merz brake and in a brake according to the present invention, when the shoes are applied to the drum with drum rotating forwardly, friction between the shoes and the drum holds the shoes against an abutment in a first limit position, when the shoes are clear of the drum, they are held in the first limit position by biasing means and when the shoes are applied to the drum with the drum rotating rearwardly friction between the drum and the shoes tends to move the shoes circumferentially of the drum away from the first limit position. In a brake according to the present invention, force is transmitted from the actuator to the shoes unequally, the larger force tending to move the shoes around the drum from the first limit position towards a second limit position and the smaller force tending to maintain the shoes in the first limit position. If the actuator of a brake according to the invention is moved to apply the shoes to the stationary drum by means of a parking brake lever which has a larger range of travel than does the service brake, then the shoes will be moved around the drum to the second limit position and will then be applied to the drum to provide full braking effect.

In the Merz brake, avoidance of substantial braking effect by the service brake during reversing of a trailer is achieved by limiting the force which can be applied by the service brake to the shoes. In a brake according to the present invention, the travel of the service brake is limited to a smaller travel than has the parking brake.

In German specification 717045, there is disclosed a brake in which force is transmitted unequally from a brake cylinder to brake shoes. However, the brake is not of the type described and operation of the brake cylinder achieves substantial braking effect with the drum rotating in either direction.

An alternative arrangement for transmitting force unequally from a brake cylinder to brake shoes is disclosed in French specification 1544028. This brake is not of the type

**0013674**

described, ends of the shoes remote from the brake cylinder being engaged with a fixed abutment which prevents movement of the shoes circumferentially of the drum.

According to the invention there is provided a brake comprising a drum which is rotatable about an axis, a torque reaction member, two shoes mounted on said member for movement relative thereto radially of said axis for engaging the drum for exerting braking torque thereon, abutment means on said torque reaction member for limiting movement of the shoes circumferentially of the drum, the shoes being movable relative to said member circumferentially of the drum between first and second limit positions defined by the abutment means, biasing means for biasing the shoes towards said first limit position, actuator means movable relative to said member for applying the shoes to the drum and means for transmitting force from the actuator means to the shoes unequally, characterised in that the larger force urges the shoes circumferentially towards said second limit position and the smaller force urges the shoes circumferentially towards said first limit position.

When fitted to a trailer or other vehicle, the brake is arranged so that during forward movement of the vehicle friction between the shoes and the drum tends to urge the shoes towards the first limit position. During forward rotation of the drum, the larger part of the force transmitted from the actuator means to the shoes is insufficient to move either of the shoes from its first limit position to its second limit position but on braking during reverse rotation of the drum, the larger part of the force transmitted from the actuator means to the shoes is sufficient to move the shoes from their first limit position towards their second limit positions. This circumferential movement of the shoes avoids the shoes being applied radially to the drum under substantial pressure and thus avoids the generation of significant braking torque during reverse rotation of the drum.

During movement of the trailer on which the brake is mounted, the brake will normally be operated by the trailer overrunning the towing vehicle. It may also be necessary to make provision for the brake to be operated by parking brake means when the trailer is parked. One of the problems associated with brakes of the type described is that if the trailer is stationary and the brake is applied by parking brake means, unless some provision is made, should the trailer start to move in reverse the brakes will come off because there will have been insufficient actuator movement. This is dealt with in some arrangements by having energy storage devices such as strong springs in the parking brake linkage so that should the trailer start to move in reverse the springs will cause further actuator movement and the brakes will be re-applied. However, the necessity for strong springs increases the force needed to be applied to the parking brake means and is therefore inconvenient.

Where the actuator is required to operate a brake in accordance with the present invention when the drum is stationary, the means for transmitting force from the actuator to the shoes is preferably so arranged that when the drum is stationary an input to the actuator of sufficient magnitude produces shoe-applying forces in a ratio such as to cause the shoes to move as a unit circumferentially of the drum to their second limit positions and to apply the shoes radially to the drum. The ratio of the respective forces transmitted from the actuator to the shoes will normally be at least 3:1.

For transmitting force from the actuator means to the shoes there may be provided a lever pivotally connected to one of the shoes and having a fulcrum on the torque reaction member, the actuator being in force-transmitting relation with the lever at a position thereon at the side of the lever pivot remote from the fulcrum. There may be provided on the shoe to which the lever is pivotally connected a stop engageable with the lever for limiting pivoting of the lever relative to the shoe.

In an alternative arrangement, the actuator is a body of liquid contained in a housing defining two inter-communicating bores of relatively smaller and larger cross sectional areas. For transmitting force from the liquid to the shoes, there are provided two pistons, one in each bore. The piston which is slidable in the larger bore is arranged to act on one of the shoes for urging the shoes towards the second limit positions and the other piston is slidable in the smaller bore and arranged for acting on the other of the shoes to urge the shoes towards the first limit positions.

A brake in accordance with the invention may further comprise an adjustable mechanism for limiting movement of a shoe away from the drum and an element for adjusting said mechanism when, during rotation of the drum in a direction from the second limit position towards the first limit position of one of the shoes, movement of said shoe towards the drum exceeds a predetermined amount, said element being associated with the shoe for movement in a first manner relative to the adjustable mechanism when the shoe moves towards the drum and the drum is rotating in said direction and for movement in a second manner relative to the adjustable mechanism when the shoe moves towards the drum and from its first limit position towards its second limit position.

Three main examples of brakes in accordance with the invention, together with modifications thereof will now be described with reference to the accompanying drawings wherein:—

FIGURE 1 shows an elevation of one example of a brake embodying the invention, a drum of the brake being removed;

FIGURE 2 is a section of the brake of Figure 1 on the line 2—2 of Figure 1, only part of the drum being shown;

FIGURE 3 is a section of the brake of Figure 1 on the line 3—3 of Figure 1 the drum being omitted entirely;

FIGURES 4, 5 and 6 are detailed views showing an alternative form of actuator which can be used in the brake of Figures 1 to 3;

FIGURE 7 is a detail view showing a hydraulic actuator which can be used in the brake of Figures 1 to 3;

FIGURE 8 is a detail view of a strut arrangement which can be used with a leading and trailing shoe brake;

FIGURE 9 is a view similar to Figure 1 but showing the brake provided with an automatic wear adjuster; and

FIGURE 10 is a view of a bi-directional, two-leading-shoe brake embodying the invention and including two actuators of the construction shown in Figure 7, the drum being partly broken away.

Detailed Description

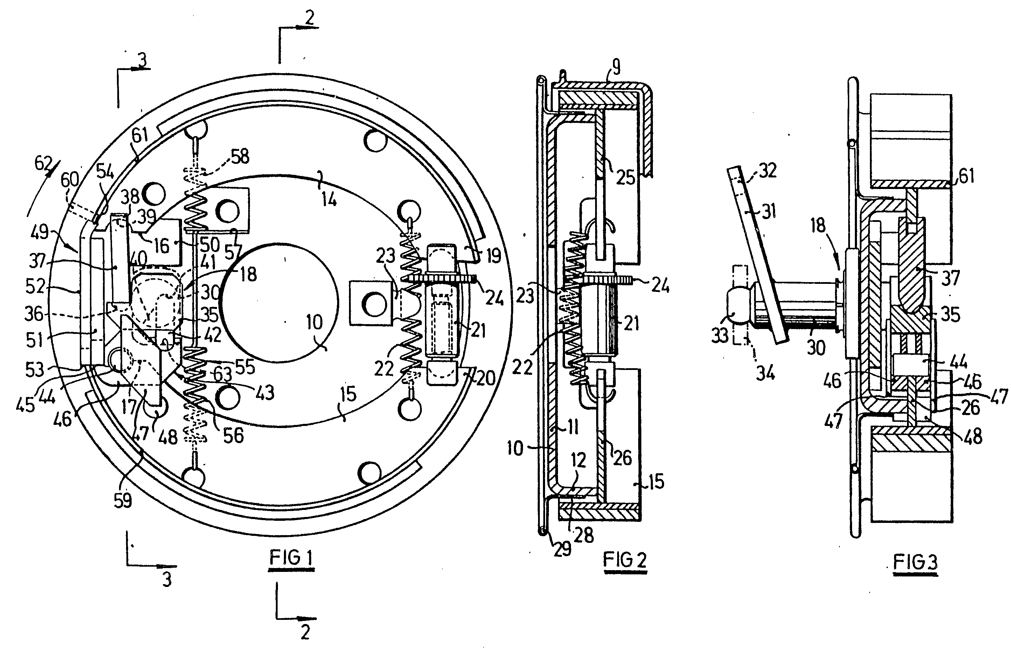

The brake shown in Figures 1 to 3 is of the duo-servo type and comprises a torque reaction member in the form of a brake back plate 10. The back plate is of dished construction having a base 11 and a peripheral flange 12. Mounted on the back plate is a primary brake shoe 14 and a secondary brake shoe 15. Arranged between the one ends 16 and 17 of the shoes 14 and 15 respectively is an actuator indicated generally at 18 and interposed between the other ends 19 and 20 of the shoes is a strut 21. A spring 22 having its ends engaged with the shoes forces the ends 19 and 20 into engagement with the ends of the strut. The strut is of the conventional adjustable type whose length can be increased to compensate for wear of the shoe linings. The spring 22 is engaged by a bracket 23 which, as shown in Figure 2 causes the spring to engage the adjusting wheel 24 of the strut to prevent undesired rotation thereof.

It will be seen from Figure 2 that the flange 12 of the backplate engages the webs 25 and 26 of the shoes 14 and 15 and locates the shoes. A dust cover indicated at 27 has a hollow spigot 28 and a flange 29 which closes the rear of the brake drum, not shown. The dust cover can be used with brakes having shoes of different widths by varying the amount of overlap of the spigot 28 and the flange 12.

The actuator 18 comprises a shaft 30 having secured thereto an arm 31 having an aperture 32 to engage a brake rod, not shown. The left-hand end of the shaft in Figure 3 is provided with a spherical portion 33 supported in a fixed bearing 34. The shaft carries a head 35 inside the back plate. The head has a first recess 36 which receives one end of a strut 37 whose other end 38 is bifurcated and received in a notch 39 in the end 16 of the shoe 14. A second recess 40 is provided in the head 35 and in this is engaged one end 41 of a strut 42. The other end of the strut 42 engages a lever 43 pivoted at 44 to the end 17 of the shoe 15 and reacting against an abutment 45 on the back plate 10. As shown in Figure 3, the lever 43 comprises two plates 46 between which the web 26 of the shoe 15 is received. Plates 47 are welded to the ends of the pivot pin 44 to locate the lever and pin in position and overlap the head 35 and also a further pin 48 carried in the web 26 of the shoe 15.

An L-shaped member 49 has one limb 50 secured to the base 11 of the back plate and the other limb 51 carries an abutment plate 52 whose ends provide abutments 53 and 54 respectively. The end which provides the abutment 53 also provides the abutment 45. A spring 55 has a first part 56 acting between the shoe 15 and a bracket 57 on the back plate and a second part 58 acting between the shoe 14 and the bracket 57. The part 56 is of greater strength than the part 58.

The brake is shown in its off position in the drawing. In this position the spring 56 acts to bias the parts so that the shoe 15 occupies a first limit position with an end of its shoe table 59 engaging the abutment 53. The shoe 14 also occupies a first limit position in which there is a clearance 60 between the abutment 54 and the adjacent end of the shoe table 61 of the shoe 14. The spring 58 retains the shoe 14 in engagement with the strut 37. The direction of forward rotation of the drum is shown by the arrow 62 and during such forward rotation the shoe 14 is the primary shoe and the shoe 15 is the secondary shoe. To apply the brake, the shaft 30 is turned in a clockwise direction as viewed in Figure 1 thus tending to move the ends 16 and 17 of the shoes 14 and 15 apart. The shaft 30 can slide in a slot 63 in the back plate. The slot is dimensioned to permit rotation of the shaft 30 and to allow it to move in directions parallel to the length of the strut 21 but restrains the shaft 30 from movement in directions perpendicular to the length of the strut 21. The forces applied to the struts 37 and 42 are equal. However, the force applied to the shoe 15 is applied via the lever 43 and the pivot 44, the lever reacting against the abutment 45, and the lever and pivot act as force multiplying means so that the force applied to the shoe 15 for a given actuator input is greater than the force applied to the shoe 14 via the strut 37.

Different conditions occur in the brake when the drum 9 (shown in Figure 2) is rotating forwardly, when it is rotating rearwardly and when it is stationary. When the drum is rotating forwardly and the brake is applied, the shoe 15 remains in engagement with the abutment 53. The force applied to the shoe via the strut 42 and the lever 43 is insufficient to overcome the sum effect of the bias spring 56 and the clockwise force of the shoe on the abutment due to rotation of the drum and movement of the shoes into engagement with the drum. The shoes are applied but the strut 37 moving the shoe 14 outwardly and the shoe 14 will move circumferentially with the drum and will operate the shoe 15 via the strut 21.

If the brake is off and the drum is rotating in reverse and the brake is then applied then the shoe 15 becomes the primary shoe and the shoe 14 the secondary shoe. The force applied to the shoe 15 by the strut 42 and the lever 43 is now sufficient to overcome the effect of the spring 56 and the resistance to circumferential movement of the shoe 15 and the two shoes and the strut move together as a unit with the ends 19 and 20 of the shoes in engagement with the strut 21 so as to reduce the clearance 60. The movement of the shoes as a unit prevents there being anything but minimal braking torque in reverse. The travel permitted of the actuator during normal service braking when the drum is rotating in reverse is such as to prevent the entire elimination of the clearance 60. As mentioned above this travel will be produced by the trailer overrunning the towing vehicle. Thus for a given actuator input, i.e. that which will prevent the entire elimination of the clearance 60 when the drum is rotating in reverse, full braking torque can be obtained with the drum rotating forwardly and only minimal braking torque with the drum rotating in reverse.

Considering now the situation where the drum is stationary and the brake is off, if the shaft 30 is now turned in a clockwise direction in Figure 1, the force applied to the shoe 15 via the strut 42 and the lever 43 will be greater than the force applied to the shoe 14 by the strut 37 so that the shoes and the strut as a unit will move round anti-clockwise in Figure 1 until the clearance 60 is eliminated. The permitted travel of the actuator, when the drum is stationary, and the actuator is operated by the parking brake means, will be greater than that which will be permitted when the drum is rotating in reverse. Approximately when the clearance 60 is eliminated the lever 43 engages the pin 48. This reduces the force multiplication of the lever 43 and thus reduces the travel of the actuator required to move the shoe 15. The purpose of the pin 48, therefore, is to prevent the parking brake means running out of travel as the brake is applied with the drum stationary.

The arrangement of the struts 37 and 42 and the lever 43 act as force dividing means of the actuator thus causing a greater force to be applied to the shoe 15 than to the shoe 14. It is apparent, also, that a greater actuator movement is required to obtain a given braking torque when the drum is rotating in reverse (because the clearance 60 has to be taken up) than when the drum is rotating forwardly. In practice, no more than a minimal braking torque is permitted in reverse by limiting the travel of the actuator operated by the trailer overrun when the drum is rotating in reverse.

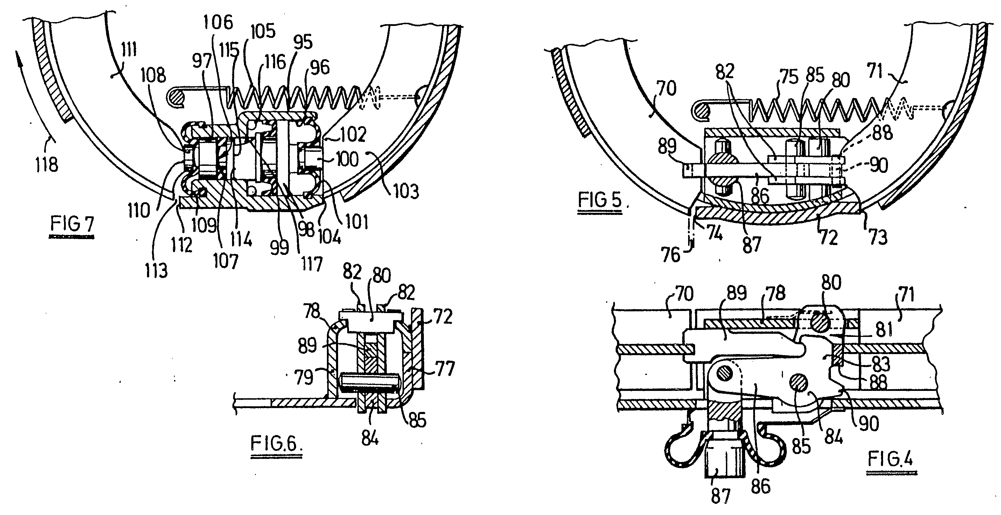

Referring now to Figures 4 to 6, these illustrate an alternative form of actuator for a brake which is otherwise the same as that described in relation to Figures 1 to 3. The brake is again of the duo-servo type and the primary shoe is indicated at 70 and the secondary shoe at 71. An abutment plate 72 is secured to the back plate and provides abutments 73 and 74 for the shoes 71 and 70 respectively. The parts are biased to the position shown by a bias spring 75 so that the shoe 71 engages the abutment 73 and there is a clearance 76 between the shoe 70 and the abutment 74.

As shown in Figure 6, the flange 77 of the back plate which carries the abutment plate 72 is turned inwardly at 77 and inwardly again at 78 and 79 to provide a bracket which carries a pivot pin 80 for a lever 81. The lever comprises two plates 82 clearly shown in Figures 5 and 6 and between them the plates receive one arm 83 of a bell crank 84 pivoted at 85 to the end of the lever remote from its pivot 80. The other arm 86 of the bell crank is connected to a rod 87 which provides the actuator input. Extending between the plates 82 is a bridge piece 88 which engages one end of the shoe 71 and a strut 89 extends between the arm 83 and the end of the shoe 70.

The arrangement of the bell crank 84 and the lever 81 acts as a force multiplying means so that an input applied via the rod 87 to the bell crank 85 is divided so that a greater force is applied to the shoe 71 than to the shoe 70 via the strut 89. This is because the forces developed in the strut 89 and at the pivot pin 85 are substantially equal and the force at the pivot pin 85 tends to move the lever 81 anti-clockwise in Figure 4 thus acting on the shoe 71 via the bridge piece 88 which is nearer to the pivot 80 than is the pivot pin 85. The difference in leverage can be of the order of 3:1.

Operation of the brake is otherwise as described in relation to Figures 1 to 3. The bell crank 84 has an ear 90 which, after the bell crank has pivoted through a predetermined distance, engages the bridge piece 88 to reduce the force multiplication of the lever arrangement. This is to prevent the parking brake running out of travel as described in relation to Figures 1 to 3 where the lever 42 engages the pin 48. An advantage of the arrangement shown in Figures 4 to 6 is that there are no sliding loads, only pin friction.

Referring now to Figure 7, this shows an hydraulic actuator which may be substituted for the mechanical actuators of Figures 1 to 6. Referring to Figure 7, the actuator comprises a housing 95 having formed therein a first bore 96 and a second bore 97. The bore 96 is of greater cross sectional area than the bore 97. Slidable in the bore 96 is a piston 98 carrying a sealing washer 99 and a projection 100 passing through a sealing boot 101, the projection engaging the end 102 of the trailing shoe 103. The end 102 of the trailing shoe engages an abutment 104 on the right-hand end of the housing under the influence of a bias spring 105. Slidable in the bore 97 is a piston 106 carrying a sealing washer 107 and having a projection 108 which passes through a sealing boot 109 to engage the end 110 of the primary shoe 111. As shown the end 110 is spaced from an abutment 112 on the housing end by a clearance 113. The left-hand end 114 of the piston 98 abuts the right-hand end 115 of the piston 106. Hydraulic fluid enters the communicating bores 96 and 97 through an aperture 116 and the piston 98 is cut away at 117 to permit the hydraulic fluid to enter the bore 97.

It will be seen that when hydraulic fluid is caused to enter the housing there will be a greater force on the piston 98 than on the piston 106. However, when the drum is rotating forwardly as indicated by the arrow 118, the effect of the bias spring 105 and the shoe reactions is such as to retain the secondary shoe 103 in the position shown so that the piston 106 moves outwardly to apply the brake via the shoe 111 and the strut between the shoes 111 and 103. When the drum is rotating in reverse, however, the greater force applied to the shoe 103 by the piston 98 as compared with the force applied to the shoe 111 by the piston 106 will cause the shoes and the strut to rotate as a unit to substantially eliminate the clearance 113. The hydraulic displacement will be limited to prevent the clearance being entirely eliminated when the drum is rotating in reverse, as before, the hydraulic displacement will be effected by the trailer overrunning the towing vehicle.

If it is desired to apply the brake when the drum is stationary additional mechanical means will normally be provided.

Thus far the invention has been described in relation to duo-servo brakes in connection with which it is particularly useful. It may, however, be applied to leading and trailing shoe brakes and in such an arrangement the abutments for the shoes, instead of being associated with the actuator ends of the shoes are associated with the ends of the shoes which engage the strut.

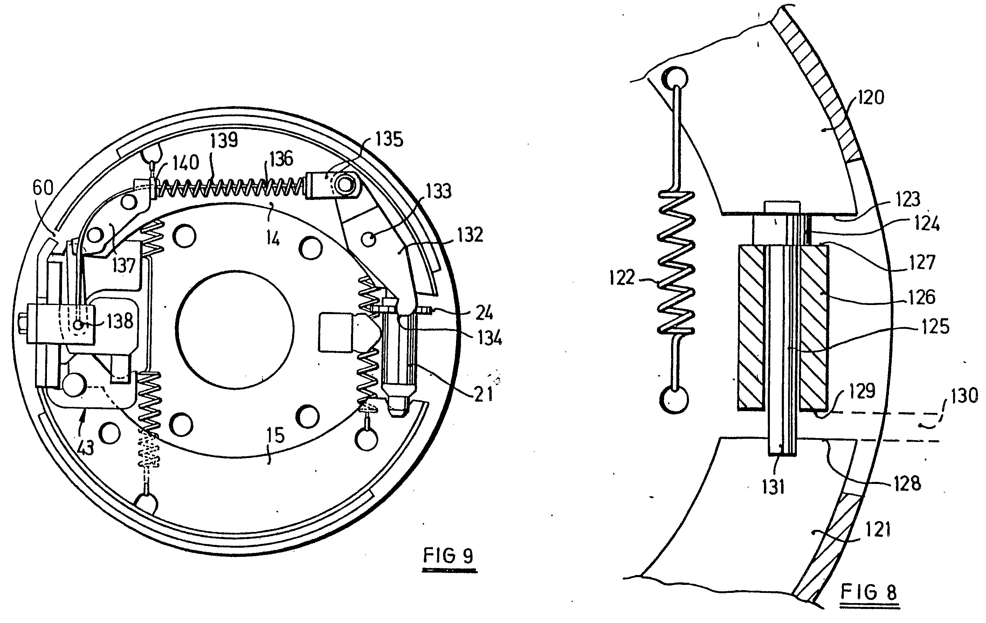

Figure 8 shows an arrangement which can be substituted for the strut 21 in a brake which is otherwise similar to that shown in Figure 1. In Figure 8, the leading shoe during forward rotation is indicated at 120 and the trailing shoe at 121. A bias spring 122, which takes the place of the bias spring 56, urges the shoe 120 into a first limit position in which an end 123 of the shoe engages with a head 124 of a strut 125 passing through a housing 126. The head 124 engages an abutment 127 constituted by one end of the housing. The spring 122 also acts indirectly on the trailing shoe 121, via the shoe 120 and the strut 125, to urge the trailing shoe 121 also into a first limit position in which an end 128 of the shoe is spaced from an abutment 129 constituted by the other end of the housing by a clearance 130. As shown in Figure 8, an end 131 of the strut 125 engages the end 128 of the trailing shoe.

During forward rotation, which will be in the direction of the arrow 62 in Figure 1, the greater force applied to the trailing shoe 121 by the actuator in the manner described in relation to Figures 1 to 3 will be insufficient to displace the leading shoe 120 from its first limit position. During reverse rotation of the drum however, the shoe 121 becomes the leading shoe and the greater force transmitted to this shoe from the actuator will cause the shoes 120 and 121 together with the strut 125 to move as a unit circumferentially of the drum in a counterclockwise direction towards second limit positions in which the clearance 130 is eliminated and the end 128 of the shoe 121 engages the abutment surface 129. As in the case of the brake described with reference to Figures 1 to 3, the actuator input is limited to prevent the shoes reaching the second limit position when the drum is rotating rearwardly.

When the drum is stationary and the brake is applied, the greater force applied to the shoe 121 will cause the shoes and the strut 125 to move as a unit circumferentially of the drum towards their second limit positions. The travel of the parking brake means will be sufficient to move the shoes to the second limit positions and eliminate the clearance 130 so that the shoes will be applied radially to the drum.

Figure 9 shows the brake of Figures 1 to 3 with an automatic wear adjuster and parts in Figure 9 which are identical to those in Figure 1 are given the same reference numerals.

The wear adjuster operates on the adjusting wheel 24 of the strut 21 and includes a pawl 132 which is pivoted at 133 to the primary shoe 14. The pawl has an end 134 which engages with the teeth on the adjusting wheel 24. The other end of the pawl is connected to a clevis 135 which in turn is connected to a cable 136. The cable passes around a guide 137 on the shoe 14 and is anchored at 138 to the back plate. A coil spring 139 acts between the clevis 135 and an abutment 140 on the guide 137.

During braking with the drum rotating in the forward direction indicated by the arrow 62 in Figure 1, the primary shoe will move radially outwardly and circumferentially thus causing the pawl 132 to pivot in an anti-clockwise direction in Figure 9. Upon the return of the brake parts to their resting positions the pawl returns to the position shown under the influence of the spring 139 and if there has been sufficient wear will engage a tooth on the adjusting wheel 24 and rotate this to increase the length of the strut in a well known manner.

During operation of the brake when the drum is rotating in reverse or when the drum is stationary, however, the shoes 14 and 15 and the strut 21 will move as a unit to reduce or substantially eliminate the clearance 60 and as a result the cable 136 will go slack and no operation of the adjusting wheel 24 will take place.

**0 013 674**

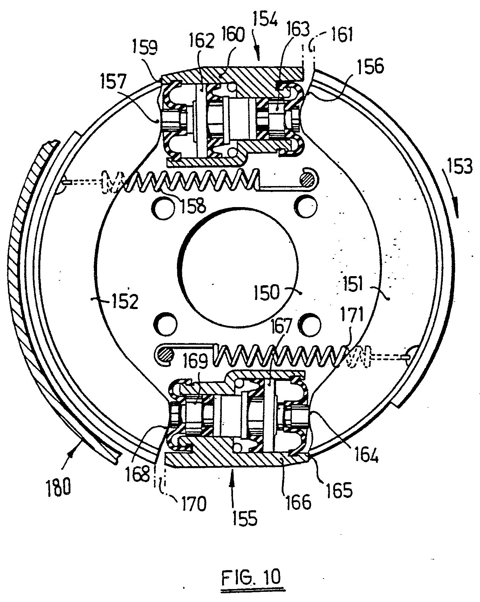

Figure 10 illustrates a brake embodying the invention of the bi-directional, two-leading-shoe type. In this type of brake each of the shoes acts as a leading shoe in each direction of rotation of the drum. The brake comprises a torque reaction member 150 in the form of a back plate and two shoes 151 and 152. The direction of forward rotation of the drum 180 is indicated by the arrow 153. Between each adjacent pair of shoe ends is interposed an actuator, one of the actuators being indicated at 154 and the other at 155. The actuators are hydraulic and are of the form described in detail in relation to Figure 7. That is to say that each actuator has a piston of larger effective diameter and a piston of smaller effective diameter. The actuator 154 is interposed between the leading end 156 of the shoe 151 and the trailing end 157 of the shoe 152, these ends being leading and trailing when considered in the direction of forward rotation of the drum as shown by the arrow 153. Spring means 158 urges the shoe 152 into a first limit position in which the end 157 engages an abutment 159 on the actuator housing 160 and there is a clearance 170 between the end 168 of the shoe 152 and the housing 166 of the actuator 155. The piston 162 of larger effective diameter associated with the actuator 154 engages the trailing end 157 of the shoe 152 while the piston 163 of smaller effective diameter associated with the actuator 154 engages the leading end 156 of the shoe 151.

In a similar manner, a spring 171 urges the shoe 151 into a first limit position in which the trailing end 164 of that shoe engages the abutment 165 on the housing 166 of the actuator 155. A clearance 161 then exists between the end 156 of the shoe 151 and the housing 160. The trailing end 164 is also acted upon by the larger diameter piston 167 associated with the actuator 155 while the leading end 168 of the shoe 152 is acted upon by the smaller diameter piston 169 associated with the actuator 155.

During application of the brake with the drum 180 rotating forwardly as indicated by the arrow 153, although larger forces are applied to the trailing end 157 and 164 of the shoes than are applied to the leading ends 156 and 158, these greater forces are insufficient to cause the trailing ends to move away from the abutments 159 and 165 respectively. The forces transmitted to the leading ends cause the shoes to be applied radially to the drum 180.

During application of the brake with the drum 180 rotating in reverse, the greater forces applied by the pistons 162 and 167 urge the trailing ends 157 and 164 away from the abutments 159 and 165 respectively so that the shoes 151 and 152 move circumferentially of the drum in an anti-clockwise direction from their first limit positions towards their second limit positions so that the clearances 161 and 170 are reduced. The quantity of hydraulic fluid available for braking when the drum is rotating in reverse is limited so as to prevent the shoes reaching their second limit positions and the generation of any substantial braking torque is prevented.

If braking is required when the drum 180 shown in Figure 10 is stationary, separate means (not shown) will be provided for applying the shoes to the drum under these conditions. Such means may be effective to displace the shoes from their first limit positions to their second limit positions and then apply the shoes radially to the drum.

The invention provides a number of embodiments of a reversing brake which is simple to manufacture and which, in its duo-servo form, may have an automatic wear adjuster.

**Claims**

1. A brake comprising a drum (9) which is rotatable about an axis, a torque reaction member (10), two shoes (14, 15) mounted on said member for movement relative thereto radially of said axis for engaging the drum and exerting braking torque thereon, abutment means (53, 54) on said member (10) for limiting movement of the shoes circumferentially of the drum and thereby defining first and second limit positions of the shoes, biasing means (55) for biasing the shoes towards said first limit position, actuator means (30) movable relative to said member for applying the shoes to the drum and means (37, 42, 46) for transmitting force from the actuator means to the shoes unequally, characterised in that the larger force urges the shoes circumferentially towards said second limit position and smaller force urging the shoes circumferentially towards said first limit position.

2. A brake according to claim 1 wherein the actuator means (30) is disposed adjacent to a respective end of each shoe (14, 15), further characterised by a strut (21) between ends of the shoes remote from the actuator means and means (22) biasing the shoes into engagement with said strut, said strut being movable relative to the torque reaction member (10) with the shoes circumferentially of the drum and the actuator means also being movable circumferentially of the drum relative to the torque reaction member.

3. A brake according to claim 1 or claim 2 further characterised in that said means for transmitting force comprises a lever (46) pivotally connected to one of said shoes (15) and having a fulcrum (45) on the torque reaction member (10), the actuator means (30) being in force-transmitting relation with the lever at a position (63) thereon at the side of the lever pivot (44) remote from the fulcrum.

4. A brake according to claim 3 further characterised by a stop (48) on said one shoe (15) and engageable by the lever (46) for limiting pivoting of the lever relative to the shoe.

5. A brake according to claim 3 further characterised in that said means for transmitting force comprises a bell crank (84) having an arm (86) to which the actuator means is connected and a further arm (83) connected to the other (70) of said shoes, the bell crank being pivoted on the lever (81).

6. A brake according to claim 5 further characterised by means (88) for limiting relative pivoting of the bell crank (84) and the lever (81).

7. A brake according to claim 1 wherein the actuator means is hydraulic, further characterised in that the actuator means comprises a housing 95 defining two inter-communicating bores of relatively smaller and larger cross sectional areas and has two pistons (98, 106) of complementary effective areas, one slidable in the larger bore and acting on one of the shoes (103) for urging the shoes towards said second limit positions and the other piston slidable in the smaller bore and acting on the other of the shoes (111) for urging the shoes towards said first limit positions.

8. A brake according to any preceding claim further comprising an adjustable mechanism (21) for limiting movement of a shoe away from the drum and an element (132) for adjusting said mechanism when, during rotation of the drum in a direction from said second limit position towards said first limit position, movement of said shoe (14) towards the drum exceeds a predetermined amount; said element being associated with said shoe for movement in a first manner relative to the adjustable mechanism when the shoe moves towards the drum and the drum is rotating in said direction and for movement in a second manner relative to the adjustable mechanism when the shoe moves towards the drum and from its first limit position towards its second limit position.

9. A brake according to claim 8 further characterised in that said mechanism is in the form of a strut (21), the length of which is adjustable and said element is in the form of a pawl (132) pivoted to one of the shoes (14), the brake further comprising a cable (136) whereof one end is connected to said pawl, the cable passing from the pawl around a guide (137) on said shoe and from the shoe in the direction of movement from the first limit position to the second limit position, an end of the cable remote from the pawl being connected to the torque reaction member, whereby when the shoe moves from its first limit position towards its second limit position, the cable becomes slack but when the shoe remains in its first limit position circumferentially of the drum and moves radially towards the drum, the cable forces the pawl to pivot on the shoe.

10. A brake according to claim 9 further characterised by a coil spring (139) surrounding the cable (136) for urging the pawl (132) to an operating position.

11. A brake according to any preceding claim further characterised in that the torque reaction member is a back plate (10) of dished form having a peripheral flange (12), the shoes (14 and 15) have respective webs (25 and 26) which co-operate with the flange to locate the shoes and there is further provided a dust cover (37) which interfits telescopically with the flange (12).

## Revendications

1. Frein comprenant un tambour (9) monté en rotation autour d'un axe, un organe de réaction au couple (10), deux sabots (14, 15) montés sur ledit organe pour se déplacer par rapport à lui radialement relativement audit axe, pour venir en contact avec le tambour et exercer sur lui le couple de freinage, des moyens de butée (53, 54) sur ledit organe (10) pour limiter le mouvement des sabots en direction circonférentielle du tambour et définir ainsi des première et seconde positions limite des sabots, des moyens de rappel (55) pour solliciter les sabots vers la première position limite, des moyens d'actionnement (30) mobiles relativement audit organe pour appliquer les sabots sur le tambour, et des moyens (37, 42, 46) pour transmettre inégalement la force des moyens d'actionnement aux sabots, caractérisé en ce que la force la plus importante sollicite circonférentiellement les sabots vers la seconde position limite et la force la plus faible sollicite circonférentiellement les sabots vers la première position limite.

2. Frein conforme à la revendication 1, dans lequel les moyens d'actionnement (30) sont adjacents à une extrémité respective de chaque sabot (14, 15), caractérisé en outre par une jambe de force (21) entre les extrémités des sabots éloignées des moyens d'actionnement, et des moyens (22) sollicitant les sabots en appui avec la jambe de force, celle-ci étant mobile par rapport à l'organe de réaction au couple (10) avec les sabots en direction circonférentielle du tambour, tandis que les moyens d'actionnement sont également mobiles en direction circonférentielle du tambour par rapport à l'organe de réaction au couple.

3. Frein conforme à l'une des revendications 1 ou 2, caractérisé en outre, en ce que lesdits moyens pour transmettre la force comprennent un levier (46) relié de façon pivotante à l'un des sabots (15) et ayant un point d'appui (45) sur l'organe de réaction au couple (10), les moyens d'actionnement (30) étant en relation de transmission de force avec le levier en une position (63) du levier située du côté du pivot (44) du levier qui est éloigné du point d'appui.

4. Frein conforme à la revendication 3, caractérisé en outre par une butée (48) aménagée sur ledit sabot (15) et sur laquelle le levier (46) peut prendre appui pour limiter le pivotement du levier relativement au sabot.

5. Frein conforme à la revendication 3, caractérisé en outre en ce que lesdits moyens pour transmettre la force comprennent un levier coudé (84) ayant un bras (86) auxquels sont

## 15

**0 013 674**

reliés les moyens d'actionnement et un autre bras (83) relié à l'autre (70) desdits sabots, le levier coudé étant monté à pivotement sur le levier (81).

6. Frein conforme à la revendication 5, caractérisé en outre par des moyens (88) pour limiter le pivotement relatif du levier coudé (84) et du levier (81).

7. Frein conforme à la revendication 1, dans lequel les moyens d'actionnement sont hydrauliques, caractérisé en outre en ce que les moyens d'actionnement comprennent un boîtier (95) définissant deux alésages intercommunicants de sections transversales d'aires relativement petite et grande et ont deux pistons (98, 106) d'aires effectives complémentaires, l'un coulissable dans le grand alésage et agissant sur l'un des sabots (103) pour solliciter les sabots vers les secondes positions limites, et l'autre piston coulissable dans le petit alésage et agissant sur l'autre des sabots (111) pour solliciter les sabots vers les premières positions limites.

8. Frein conforme à l'une quelconque des revendications précédentes, comprenant en outre un mécanisme réglable (21) pour limiter le mouvement d'un sabot en direction opposée au tambour et un élément (132) pour régler ce mécanisme quand pendant la rotation du tambour dans une direction de la seconde postion limite vers la première position limite, le mouvement dudit sabot (14) vers le tambour dépasse une valeur prédéterminée, cet élément étant associé au sabot pour se déplacer d'une première manière relativement au mécanisme réglable quand le sabot se déplace vers le tambour et le tambour tourne dans la direction précitée, et pour se déplacer d'une seconde manière relativement au mécanisme réglable quand le sabot se déplace vers le tambour de sa première position limite vers sa deuxième position limite.

9. Frein conforme à la revendication 8, caractérisé en outre en ce que ledit mécanisme est réalisé sous la forme d'une jambe de force (21) dont la longueur est réglable et ledit élément est réalisé sous la forme d'une cliquet (132) monté à pivotement sur l'un des sabots (14), le frein comprenant en outre un câble (136) dont une extrémité est reliée au cliquet, le câble passant du cliquet audit sabot autour d'un guide (137) et du sabot dans la direction de mouvement de la première position limite à la seconde position limite, une extrémité du câble éloignée du cliquet étant reliée à l'organe de réaction au couple, de sorte que lorsque le sabot se déplace de sa première position limite vers sa seconde position limite, le câble prend du mou, mais lorsque le sabot demeure dans sa première position limite circonférentielle relativement au tambour, et se déplace radialement vers le tambour le câble provoque la rotation du cliquet sur le sabot.

10. Frein conforme à la revendication 9, caractérisé en outre par un ressort hélicoïdal (139) entourant le câble (136) pour solliciter le cliquet (132) vers une position de fonctionnement.

11. Frein conforme à l'une quelconque des revendications précédentes, caractérisé en outre en ce que l'organe de réaction au couple est un plateau arrière (10) en forme de cuvette ayant une lèvre périphérique (12), en ce que les sabots (14 et 15) ont des âmes respectives (25 et 26) qui coopèrent avec la lèvre pour positionner les sabots et en ce qu'il est en outre prévu un cache-poussière (37) qui s'emboîte télescopiquement avec la lèvre (12).

**Patentansprüche**

1. Eine Bremse, welche eine um eine Achse drehbare Trommel (9), ein Drehmoment-Reaktionsglied (10), zwei auf dem Reaktionsglied zur Bewegung relativ zu demselben und radial zu der Achse zum Ineingriffkommen mit der Trommel und Ausüben von Bremsdrehmoment auf diese angebrachte Bremsbacken (14, 15); Anschläge (53, 54) auf dem Reaktionsglied (10) zum Begrenzen der umfangsmäßig zur Trommel gerichteten Bewegung der Bremsbacken, wodurch erste und zweite Grenzpositionen der Bremsbacken definiert werden; Vorspanneinrichtungen (55) zum Vorspannen der Bremsbacken gegen die erste Grenzposition; relativ zum Reaktionsglied zum Andrücken der Bremsbacken auf die Trommel bewegbare Betätigungseinrichtungen (30); und eine Kraftübertragungseinrichtung (37, 42, 46), zum ungleichen Übertragen der Kraft von den Betätigungseinrichtungen zu den Bremsbacken aufweist, dadurch gekennzeichnet, daß die größere Kraft die Bremsbacken umfangsmäßig gegen die zweite Bremsposition drückt und die kleinere Kraft die Bremsbacken umfangsmäßig gegen die erste Bremsposition drückt.

2. Bremse gemäß Anspruch 1, in welcher die Betätigungseinrichtung (30) benachbart dem jeweiligen Ende jeder Bremsbacke (14, 15) angeordnet ist, ferner gekennzeichnet durch eine verstellbare Strebe (21) zwischen dem von der Betätigungseinrichtung (30) entfernten Ende der Bremsbacken und durch eine Vorspanneinrichtung (22) zum Vorspannen der Bremsbacken in Eingriff mit der Strebe, wobei die Strebe relativ zum Drehmoment-Reaktionsglied (10) gemeinsam mit dem Bremsbacken umfangsmäßig zur Trommel bewegbar ist und die Betätigungseinrichtung ebenfalls umfangsmäßig zur Trommel, relativ zum Drehmoment-Reaktionsglied, bewegbar ist.

3. Eine Bremse nach Anspruch 1 oder 2, dadurch gekennzeichnet, daß die Kraftübertragungseinrichtung einen schwenkbar mit einer der Bremsbacken (15) verbundenen Hebel (46) aufweist und eine Abstützung (45) auf dem Drehmoment-Reaktionsglied (10) besitzt, wobei die Betätigungseinrichtung (30) sich in kraftübertragender Beziehung mit dem Hebel an einer Position (63) auf demselben seitlich

9

der Hebelachse (44), entfernt von der Abstützung, befindet.

4. Eine Bremse nach Anspruch 3, ferner dadurch gekennzeichnet, daß ein Anschlag auf dieser einen Bremsbacke (15) vorgesehen ist und zur Begrenzung des Schwenkens dieses Hebels relativ zur Bremsbacke durch die Hebel (46) in Eingriff bringbar ist.

5. Eine Bremse nach Anspruch 3, ferner dadurch gekennzeichnet, daß die Kraftübertragungseinrichtung einen Kniehebel (84) aufweist, welcher einen Arm (86) besitzt, mit welchem die Betätigungseinrichtung verbunden ist und einen weiteren Arm (83) besitzt, welcher mit der anderen Bremsbacke verbunden ist, wobei der Kniehebel auf dem Hebel (81) gedreht wird.

6. Eine Bremse nach Anspruch 5, ferner gekennzeichnet durch Mittel (88) zur Begrenzung des relativen Drehens des Kniehebels (84) und des Hebels (81).

7. Eine Bremse nach Anspruch 1, in welchem die Betätigungseinrichtung hydraulisch ist, ferner dadurch gekennzeichnet, daß die Betätigungseinrichtung ein Gehäuse (95) aufweist, welches zwei miteinander kommunizierende Bohrungen relativ kleinerer und größerer Querschnittflächen definiert und zwei Kolben (98, 106) komplementär wirksamer Flächen besitzt, wobei einer in der größeren Bohrung verschiebbar ist und auf eine der Bremsbacken (103) wirkt, um die Bremsbacken gegen die zweiten Begrenzungspositionen zu drücken und der andere Kolben in der kleineren Bohrung verschiebbar ist und auf die andere der Bremsbacken (111) wirkt, um die Bremsbacken gegen die erste Begrenzungspositionen zu drücken.

8. Eine Bremse nach irgendeinem der vorangehenden Ansprüche, welche ferner eine Einstelleinrichtung (21) zur Begrenzung der Bewegung einer Bremsbacke von der Trommel weg und ein Einstellelement (132) zum Einstellen dieses Mechanismus dann, wenn während Rotation der Trommel in einer Richtung von der zweiten Grenzposition gegen die erste Grenzposition die Bewegung der Bremsbacke (14) gegen die Trommel einen vorherbestimmten Wert überschreitet, wobei das Einstellelement mit der Bremsbacke zur Bewegung in einer ersten Weise relativ zum Einstellmechanismus zusammenarbeitet, wenn die Bremsbacke sich gegen die Trommel bewegt und die Trommel sich in dieser Richtung dreht und zur Bewegung in einer zweiten Weise relativ zum Einstellmechanismus, wenn die Bremsbacke sich gegen die Trommel und aus ihrer ersten Grenzposition gegen ihre zweite Grenzposition bewegt.

9. Eine Bremse gemäß Anspruch 8, ferner dadurch gekennzeichnet, daß der Einstellmechanismus in Form einer Strebe (21), deren Länge einstellbar ist, und das Einstellelement in Form einer auf einer der Bremsbacken (14) drehbaren Klinke (132) vorliegt, wobei die Bremse ferner ein Kabel (136), dessen eines Ende mit der Klinke verbunden ist, aufweist, wobei das Kabel sich von der Klinke um eine Führung (137) auf dieser Bremsbacke herum und von der Bremsbacke hinweg in Bewegungsrichtung der ersten Grenzposition zur zweiten Grenzposition erstreckt, während das von der Klinke entfernte Ende des Kabels mit dem Drehmoment-Reaktionsglied verbunden ist, wodurch dann, wenn die Bremsbacke sich von ihrer ersten Grenzposition in ihre zweite Grenzposition bewegt, das Kabel locker wird, aber das Kabel dann, wenn die Bremsbacke in ihrer ersten Grenzposition umfangsmäßig zur Trommel verbleibt und sich radial zur Trommel bewegt, die Klinke zum Schwenken auf der Bremsbacke trägt.

10. Bremse nach Anspruch 9, ferner gekennzeichnet durch eine das Kabel (136) zum Drücken der Klinke (132) in eine Betriebsposition umgebende Spiralfeder (139).

11. Bremse nach irgendeinem der vorangehenden Ansprüche, ferner dadurch gekennzeichnet, daß das Drehmoment-Reaktionsglied eine scheibenförmige Rückenplatte (10) ist, welche eine Umfangsflansch (12) aufweist, wobei die Bremsbacken (14 und 15) entsprechende Seitenwände (25 und 26) aufweisen, welche mit dem Flansch zusammenwirken, um die Bremsbacken einzustellen, wobei ferner eine Staubabdeckung (37) vorgesehen ist, welche teleskopartig mit dem Flansch (12) zusammenpaßt.

FIG 1

FIG 2

FIG 3

0013674

FIG 7

FIG 5

FIG.6.

FIG.4

0013674

2

FIG 9

FIG 8

0013674

FIG. 10

4